# EUROPEAN PATENT APPLICATION

(11) **EP 1 306 735 A1**
(43) Date of publication of application: **02.05.2003**
(21) Application number: 01811045.2
(22) Date of filing: 25.10.2001
(51) Int. Cl.: G05B 19/042

(54) **Control of a meeting room**

(71) Applicant: ABB Installationen AG, 8604 Volketswil (CH)
(72) Inventor: Huber, Robert, 8105 Regensdorf (CH); Mallick, Vishal, 5413 Birmenstorf (CH); Schu, Wolfgang, 5316 Gippingen (CH); Zurkirchen, Peter, 8702 Zollikon (CH)
(74) Representative: ABB Patent Attorneys

(57) **Abstract**

A control device and method for a meeting room provides a common control interface technical devices such as audio-visual devices and systems for heating, ventilation and air conditioning (HVAC).

According to the invention, not only technical subsystems but also service subsystems for catering, providing and servicing equipment, and travel related services such as taxi and hotel reservations are accessed through a single common user interface device. The user interface is configured to display user interface elements for controlling technical devices as well as user interface elements for communicating with service related computer applications.

## Description

### Field of the Invention

The invention relates to the field of building automation. It relates to a control device, method and computer program for controlling a meeting room as described in the preamble of claim 1,7 and 12, respectively.

### Background of the Invention

Modern meeting rooms or conference rooms are equipped with a multitude of technical devices such as overhead projectors, video projection screens, audio systems, adjustable lighting and window blinds etc. It is known to provide a common control interface to a limited number of such technical devices, e.g. for dimming lights and activating a projector. For example, Crestron Electronics Inc., NJ, USA provides controllers for audio-visual devices integrated with a technical system for heating, ventilation and air conditioning (HVAC) in homes, classrooms and auditoriums.

However, such control devices and systems for inhabited rooms do not provide an optimal degree of usability.

### Description of the Invention

It is an object of the invention to create a control device, method and computer program for controlling a meeting room of the type mentioned initially, which provides a more flexible and easier interface.

These objects are achieved by a control device, method and computer program for controlling a meeting room according to the claims 1, 7 and 12.

According to the invention, not only technical subsystems but also service subsystems are accessed through a single common user interface device and user interface program. The user interface is configured to display user interface elements for controlling technical devices as well as user interface elements for communicating with service related computer applications.

Service subsystems are for example related to catering, hotel or flight reservation, taxi ordering, building access and reception, room reservation and support, and to a system for viewing costs and billing a customer for one or more of the preceding services, e.g. an enterprise resource planning (ERP) system.

As a result, essentially all technical functions and relevant services are accessible to a user of the meeting room in an automated fashion. There is only a single user interface device and program. This greatly increases the usability of the meeting room, as compared to a situation where different services are accessed through different internal or external phone connections or are not accessible at all.

In a preferred embodiment of the invention, the user interface is configured to issue commands to the technical devices and service applications in accordance with a predetermined scenario that specifies sets of commands that are to be issued together, in accordance with a user input or at a predetermined time.

This allows to define sequences of scenarios that are needed in typical processes such as candidate interviews, brainstorming meetings, customer presentation etc. For each scenario, an associated combination or set of commands to technical devices and/or service applications is issued by pressing a single user interface button.

In a further preferred embodiment of the invention, the user interface elements for the technical devices and for the service applications are accessed through a plurality of different GUI displays that are preferably hierarchically organised.

In a further preferred embodiment of the invention, the user interface elements are displayed on a portable pad device having a touchscreen and a wireless communication interface to the technical and service systems or to an intermediate data processing unit.

Further preferred embodiments are evident from the dependent patent claims.

### Brief Description of the Drawings

The subject matter of the invention will be explained in more detail in the following text with reference to preferred exemplary embodiments which are illustrated in the attached drawings, in which:
- Figure 1: schematically shows a structure of an inventive control device and systems with which it interacts.
- Figures 2-5: show GUI displays according to the invention.

The reference symbols used in the drawings, and their meanings, are listed in summary form in the list of reference symbols. In principle, identical parts are provided with the same reference symbols in the figures.

### Detailed Description of Preferred Embodiments

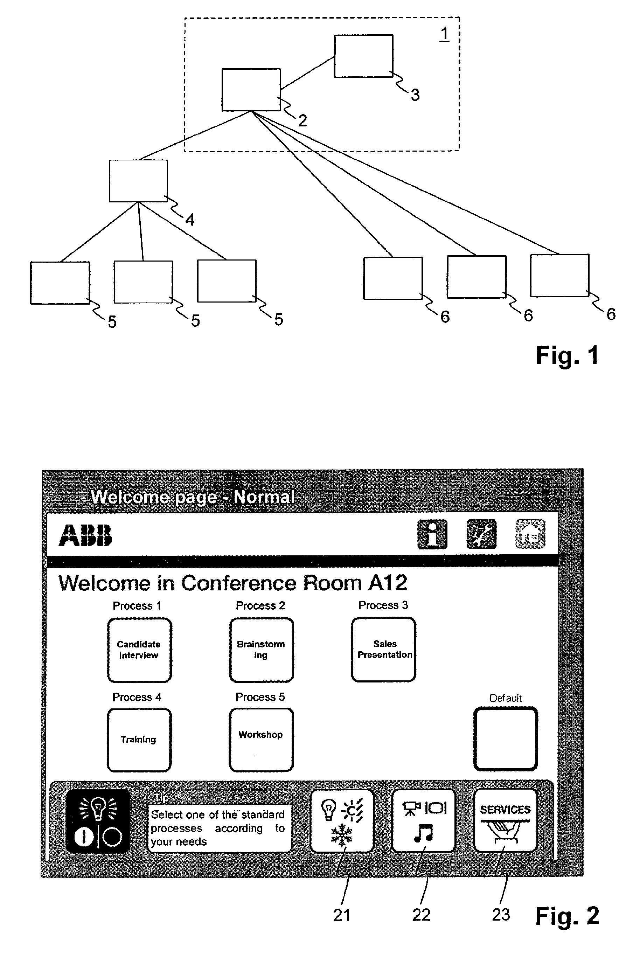

Figure 1 schematically shows a structure of an inventive control device 1 for a meeting room and systems with which it interacts. Lines between the boxes represent communication links. The control device 1 comprises a data processing unit 2 and graphic user interface (GUI) device 3. The data processing unit 2 is configured to communicate with a plurality of technical support devices 5, that are installed in or associated with the meeting room. Said communication with the technical support devices 5 is accomplished either directly or through a technical support control device 4, in both cases using e.g. dedicated communication channels and/or a wire-based or wireless local area network. Technical support devices 5 are, for example and not limited to: audio-visual (AV) devices or systems, heating, ventilation and air conditioning (HVAC) systems, a telephone system, voting devices, equipment for simultaneous translation, and building related devices or systems for the control of lighting and window blinds. AV devices are e.g. an overhead projector, a video front or back projection device, a television and an audio system. AV systems are e.g. collaborative working environments for video conferences, shared computer screens, electronic whiteboards etc. The technical support control device 4 provides a common computer interface for controlling the technical support devices 5 through the communication link with the data processing unit 2.

In a preferred embodiment of the invention, the data processing unit 2 and GUI device 3 are implemented in a common case that is either portable or installed at a fixed location of the meeting room. In another embodiment, the GUI device 3 is mobile and portable while the data processing unit 2 is installed in a fixed location, with the GUI device 3 and data processing unit 2 communicating through a wireless communication link. The GUI device 3 preferably receives information from the control device 1 through a web-based protocol such as HTML, XML or a related protocol, so that only standard browser software is needed on the GUI device 3. The GUI device 3 preferably comprises a touchscreen and optionally means for displaying video signals and/or audio input and output means. In another embodiment of the invention, the control device 1 does not comprise a dedicated GUI device 3, but a standard personal computer serves as GUI device 3. In this embodiment, certain or all functions for controlling the meeting room are only accessible after user authentication, e.g. by the user entering a password.

The data processing unit 2 is configured to communicate with at least one service interface device 6. A service interface device 6 provides a computer interface to a service related computer application. A service related computer application is executed in a service related system, e.g. a catering interface system, a hotel reservation system, a taxi reservation system, a transport reservation system, a building access control system, a reception system, a room reservation system or a room support system

A service interface device 6 is, in one embodiment of the invention, a physically separate device with a data processing unit that is programmed to transmit data from the data processing unit 2 to a service related computer application and vice versa. In a preferred embodiment of the invention, the service interface device 6 is a data processing device on which the associated service related computer application itself is executed.

The communication between the data processing unit 2 and the technical support control device 4, the technical support device 5 and the service interface devices 6 is implemented using existing or dedicated application program interfaces (APIs) or existing standards for interfacing computer applications, such as e.g. Microsoft™ .COM, .DCOM, the common object request broker architecture (CORBA), simple object access protocol (SOAP), Java TM Remote Method Invocation (RMI) or skyva iDoc.

The control device 1 is configured to display GUI elements such as buttons, pull-down menus, pop-up boxes etc. These allow a user to interact with both the technical support devices 5 and the service interface devices 6 with associated service related computer applications, i.e. to issue commands to said devices 5,6 and/or to view information originating from said devices 5,6. In a preferred embodiment of the invention, a computer program running on the data processing unit 2 operating as a server computer generates the GUI elements or generates display control data such as HTML code that is transmitted to the GUI device 3 and causes the GUI elements to be displayed on the GUI device 3. User actions such as operating a button are input at the data processing unit 2 and transmitted to the control device 1. In a further preferred embodiment of the invention, the data processing unit 2 comprises several computers operating as a cluster, and a computer program that implements the method according to the invention comprises a set of computer program elements or program modules. Each of the program modules is executed on an associated computer of the cluster.

Some examples of the operation of the inventive control device 1 and associated method are now given.

Figure 2 shows a GUI device 3 display screen in an initial state of the control device. A main area of the screen shows a plurality of controls or buttons labelled with predefined types of activities or processes that are expected to take place in the meeting room, such as "candidate interview", "brainstorming", "sales presentation", "training" and "workshop". A separate area of the screen displays a screen button or button 21 for accessing HVAC and lighting control functions, a button 22 for accessing AV functions and a button 23 for accessing services. Other processes are e.g. defined for "presentation", "general meeting", "training", "video conferencing".

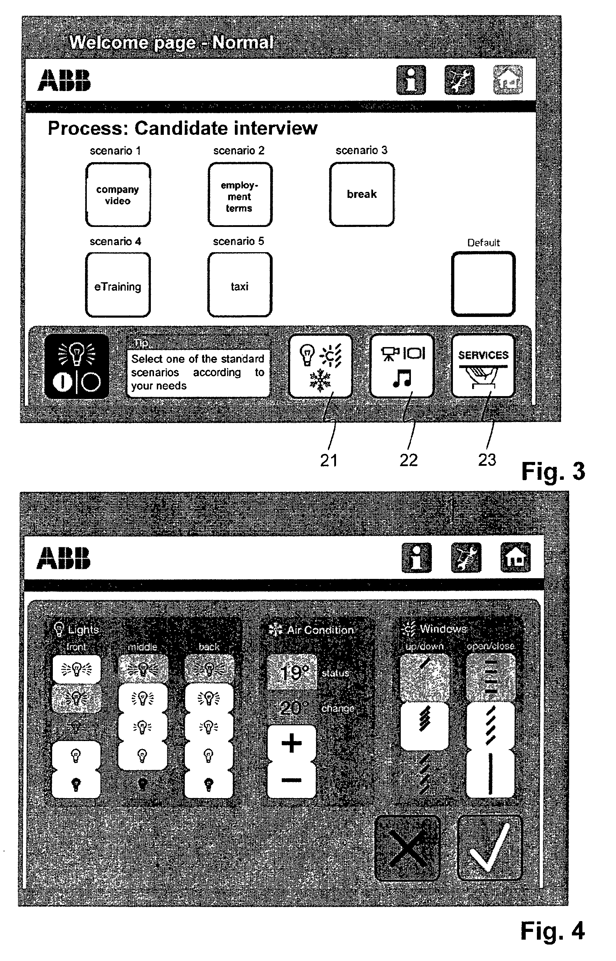

When a user operates the button for the process " candidate interview", e.g. by touching the respective area of a touch screen, this user action causes the process to be selected, whereupon the display according to figure 3 is shown. The screen now shows a plurality of predetermined settings and/or actions, called "scenarios" that are scheduled to take place during an interview with a candidate for an open position.

When the button "company video" is operated, the control device 1 sends commands to the different technical support devices 5, i.e.
- a command to switch on a video projector and recorder
- a command to the lighting system for dimming lights,
- a command to the blind controller for lowering blinds, and
- when the control device 1 receives a feedback from the blind controller that the blinds have reached a given position, a command to the video system for starting playback of a video recording.

When the button "employment terms" is operated, lighting and blinds are adjusted as for the "company video" scenario, and
- employment terms are projected onto a smart board. The smart board allows users to navigate employment related documents.

When the button "break" is operated, the control device 1 sends commands
- to one or more technical support devices 5 for adjusting lighting and ventilation, and
- to a service interface device 6 of a catering interface system, which in turn, through an appropriately located user interface, alerts an employee to deliver a prearranged quantity of snacks and drinks.
Optionally, upon operating the "break" button, a GUI menu is displayed that shows the prearranged quantity of snacks and drinks and allows the user to make changes and/or to place the order while specifying a later time for delivery.

When the button "eLearning" is operated, e.g. when an interviewee is interested in electronic learning based training available at the company,
- lighting, blinds and projector are activated according to predetermined settings,
- a live link to an intranet eLearning based system is activated so that a demo can be made and a list of in house courses available can be shown.

When, towards the end of the interview, the button "taxi" is operated, the control device 1 sends a command
- to a taxi ordering system, and
- optionally displays GUI elements for choosing a desired time when the taxi is required,
- displays a confirmation message stating that and when a taxi shall be ready.

Such a computerised taxi ordering system is described e.g. in "TAXIPAK - COMPUTER AIDED DISPATCH Short Product Description", from MobileSoft Consulting, Inc., 7592 Coventry Woods Dr., N Dublin, Ohio 43017 USA. The TaxiPak dispatch system is a complete software application that provides computer aided dispatch services to taxi fleet operations. Entering and retrieving customer orders are accomplished through automated computer interfaces. TaxiPak combines wireless messaging, enterprise computing, and database management into a single, comprehensive package.

When a user, in a situation as in Figure 2, operates the button "sales presentation", then a display analogous to figure 3 is generated, with scenarios such as
- Meeting Agenda
- Company Presentation
- Product Presentation
- Preselected videos and slides
- Live video link to reference Site
- Video Conference
- eBusiness Demo
- Participants' List (display)
- Conference Room Reservation
- Virtual Reception
- Re-arrange seating
- Catering
- Materials Replacement
- Hotel Room Reservation
- Taxi
In each scenario, similar to the candidate interview example shown above, a plurality of commands to lighting, AV and/or service subsystems is issued.

On a screen showing processes as in Figure 2, there may also be displayed a process "board meeting". When a user operates a corresponding button labelled " board meeting", buttons for the following scenarios are displayed
- Meeting Agenda
- Video Links to off-site Participants
- Reports
   - Financial
   - Stock
   - Operational
- Protocol
   - Minutes of Meeting
   - Executive Decisions
- Simultaneous Translation
- Catering
- Materials Replacement
- Hotel Room Reservation
- Taxi

When a user operates the button "default", a screen is displayed that allows to select one of a plurality of standardised default settings, such as
- presentation
- general meeting
- training
- video Conferencing

When the button 21 for accessing HVAC and lighting control functions is operated, the control device 1 causes a GUI screen with GUI elements for e.g. adjusting room temperature, ventilation, blinds etc. to be displayed. An example for such a screen is given in figure 4.

In a preferred embodiment of the invention, the computer program for generating GUI elements and interpreting user actions is executed on the data processing unit 2. Data sent to a technical support device 5 corresponds e.g. to set points for values controlled by the technical support device 5, e.g. for room temperature, or corresponds to on/off switching commands.

When the button 22 for accessing AV functions is operated, the control device 1 displays GUI elements that are specific to the available AV equipment. For active AV devices, e.g. a video recorder that is turned on, corresponding control elements for start/stop/fast_forward etc. are displayed, and activating a control element causes a corresponding command to be sent to the AV device.

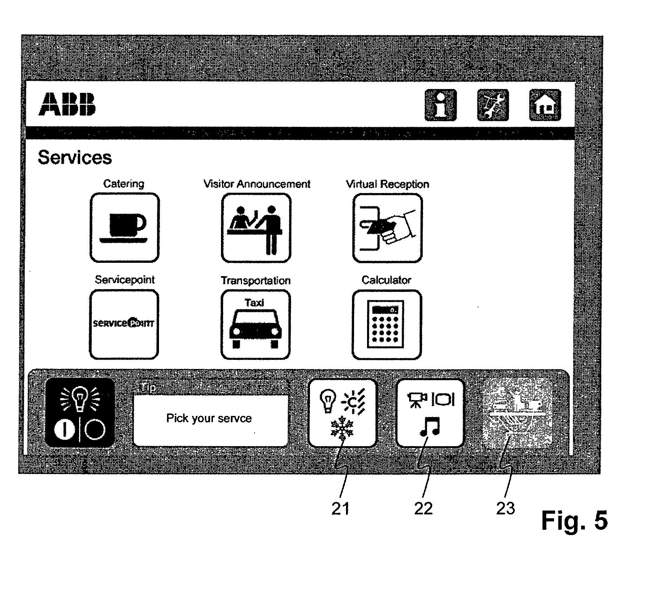

When the button 23 for accessing services is operated, the control device 1 displays a GUI with control elements such as buttons that allow to select one or more available services. Figure 5 shows a display for accessing services, with buttons for services labelled
- "catering" for accessing a catering interface system,
- "visitor announcement" for accessing a visitor management system,
- "virtual reception" for accessing a reception system,
- "service point" for accessing a room support system, and
- "transportation" for accessing a taxi ordering and/or other transport related system.
Other buttons may provide calculator functions or gaming capabilities for the bored user.

When a service is selected by the user operating the button indicating the service, a display with GUI elements according to the service is displayed. For each service, there is implemented a corresponding user interface with usually a plurality of hierarchically organised displays. The exact organisation of each user interface is not essential for the invention, and each user interface may be implemented in various ways. Essential functions of the different service related computer applications that are accessed and/or controlled through the control device 1 and user interaction with GUI elements generated by the control device 1 are given below.
If the service related computer application is a catering interface system, it provides functions e.g. for
- Organise catering: ordering given quantities of goods to be delivered at a specified time or on demand within a specified time window.
- change or cancel orders.
In a preferred embodiment of the invention, the catering interface system causes a list of goods that may be ordered to be displayed on the GUI device 3. For each item of the list, a number indicating a quantity is selectable by e.g. pressing up/down arrows or other well known input methods. Pressing a confirmation button causes an order command to be issued to the catering subsystem. As a result, the order is displayed in the kitchen of the caterer, or an e-mail is sent to a caterer. In a variant of the invention, the caterer confirms acceptance and, at a later time, delivery of the order. Such a confirmation message is sent to the control device 1 and is displayed on the GUI device 3. The order or e-mail message to the caterer includes billing information with the identity and account or project number of the meeting room user. As a result, billing through an ERP system of the caterer or meeting room provider can automatically include catering costs.

If the service related computer application is a hotel reservation system, it provides functions for e.g. booking a hotel room and displaying a booking confirmation. Such a system is provided e.g. as the "Opera web booking engine" from MICROS - FIDELIO Software Deutschland GmbH, Europadamm 2-6, D - 41460 Neuss. www.micros.de/start.htm. It allows room reservation by a customer and includes programming interfaces to third party computer applications.
A similar system is described in http://www.hogatex.com/iprod1_e.html.

If the service related computer application is a taxi ordering system, it provides functions e.g. as shown in the above example.

If the service related computer application is a transport related system, it provides functions for e.g.
- remote check-in for airline passengers,
- ordering tickets and seat reservations for available carriers, and
- receiving time table information.

If the service related computer application is a building access control system, it provides functions e.g. for
- a user (host) at the GUI device 3 to enter information such as name and expected arrival time regarding an expected visitor. The information is transmitted and processed by the access control system.
- maintaining a list of visitors that were scheduled to participate at a meeting but did not arrive, and for communicating that list for display on the GUI device 3.
- upon arrival of a visitor, querying the visitor for his name, transmitting the name and optionally a video picture of the visitor to the GUI device 3 for display to the host user in the meeting room, accepting an identity confirmation entered at the GUI device 3, and allowing the visitor access to the building.
Such a system is offered e.g. by Lenel Systems International Inc. and described in http://www.lenel.com/software/og_evisitor.htm. "OnGuard Visitor" provides a browser based application that allows companies to manage and track visitors throughout their enterprise.

If the service related computer application is a reception system, it provides functions e.g. for
- displaying a message for a person in the meeting room.
- video and/or audio communication between the GUI device 3 and a reception terminal located at a building entrance,
- releasing a visitor badge or opening a door after a confirmation has been entered at the GUI device 3 by a user.

If the service related computer application is a room reservation system, it provides functions e.g. for making a room reservation within the same building or location, including a specification of technical equipment and services to be used.

If the service related computer application is a room support system, it provides functions e.g. for
- ordering, changing or cancelling additional equipment
- system support by connecting to a help desk for repair of technical devices, or
- system support for additional equipment, e.g. providing whiteboard markers.
The example of such a support system is "Concept 500", a facilities management system from the company Facilities Software International Limited, UK, with documentation in http://www.fsi.co.uk/FSI_prod_conSQL.htm. The system comprises e.g. an order module that allows the user to order and receive goods, and record payments for goods received.

In a further preferred embodiment of the invention, the control device 1 is configured to provide a user interface for and a communication link to a telephone system. This control device 1 can then be used to establish phone conferences and/or to link phone to an installed sound system of the meeting room. An example for the integration and interfacing of a control system with a telephone system is shown in US 6,192,282. Alternatively, such an interface is realised using JTAPI, which is a standard Java™ API (Application Program interface) for telephony call control. JTAPI enables the creation of portable Java™ software products that can operate on any telephony product that exposes its services through a JTAPI interface.

In a preferred embodiment of the invention, the control device 1 is configured to, in the case of an alarm situation and in accordance with the nature of the alarm, display an alarm message on the GUI device 3, and optionally to cause an audible alarm to be generated by the audio output device of the GUI device 3 and/or the AV system. In emergency situations, the control device 1 turns down the sound of a running AV presentation and sets lighting to a standard brightness level.

In another preferred embodiment of the invention, the control device 1 is configured to serve as a web browser for the internet and/or a companies intranet. Access to either of these nets is preferably based on a user identification.

In a preferred embodiment of the invention, some services and/or technical device controls are only accessible after entering a password or providing another identification, e.g. by smartcard, while others, such as lights on/off are always operable by any person.

In a further preferred embodiment of the invention, the control device 1 is configured to communicate usage data to an accounting system. This allows the accounting system to charge a user for costs related to an actual use of resources. These used resources include specific technical devices, services such as catering and support, internet access etc. Since said services are ordered and confirmed through the system according to the invention, all the information required for billing is already available in machine-readable from and does not have to be entered again manually.

A computer program for controlling a meeting room according to the invention which is loadable into an internal memory of one or more digital computers (2), comprises computer program code means to make, when said program is loaded in the computer or the computers, the computer or computers execute the method according to one of claims 1 to 6.

A corresponding computer program product comprises a computer readable medium, having a computer program according to the invention recorded thereon. In a preferred embodiment of the invention, the computer program product also comprises a configuration program. The configuration program allows a user that is setting up a control device 1 to select technical and service subsystems 5,6 that are to be controlled through the control device 1. According to the user input, required program modules are installed on the one or more computers of the control device 1 and/or on the GUI device 3.

### List of designations

- 1: control device
- 2: data processing unit
- 3: graphic user interface (GUI) device
- 4: technical support control device
- 5: technical support device
- 6: service interface device
- 21: HVAC button
- 22: AV settings button
- 23: services button

## Claims

1. A control device (1) for controlling a meeting room, where the control device (1) comprises means for communicating with technical support devices (5) and means for generating graphic user interface (GUI) elements for interacting with the technical support devices(5), which GUI elements are displayable on a GUI device (3),
**characterized in that**
the control device (1) comprises
means for providing GUI elements for interacting with service related computer applications, and means for communicating with service interface devices (6) that provide interfaces to said service related computer applications.

2. Control device (1) according to claim 1 which is configured to issue, in response to a single user action being performed, an associated predetermined set of commands to at least one of the technical support devices (5) and the service interface devices (6).

3. Control device (1) according to claim 1 in which the GUI elements are displayable on a GUI device (3) that is implemented in a portable display pad comprising a touchscreen and a wireless communication interface for communicating with the technical support devices (5) and the service interface devices (6).

4. Control device (1) according to claim 1 that is configured to display live video images.

5. Control device (1) according to claim 1 that comprises audio output and input devices.

6. Control device (1) according to claim 1 wherein the service interface devices (6) comprise interface devices to at least one of a catering interface system, a hotel reservation system, taxi ordering system, transport reservation system, building access control system, reception system, room reservation system, room support system.

7. A method for controlling a meeting room, the method comprising the steps of
displaying, on a graphic user interface (GUI) device (3), GUI elements for interacting with technical support devices (5), and, in response to user actions, communicationg with and controlling the technical support devices (5),
**characterized in that** the method comprises the steps of
displaying, on the GUI device (3), GUI elements associated with service related computer applications, and, in response to user actions, communicating with and controlling the service related computer applications.

8. Method according to claim 7, wherein in response to a user action for selecting a scenario, an associated predetermined set of commands to at least one of the technical support devices (5) and the service interface devices (6) is issued.

9. Method according to claim 8, wherein a plurality of GUI elements is displayed on the GUI device (3), with each GUI representing one scenario, and where the GUI elements are arranged to represent a sequence of scenarios.

10. Method according to claim 7, wherein the technical support devices (5) comprise at least one of an overhead projector, a video projection device, an audio system, a lighting control system, a window blinds or a HVAC related device or control system.

11. Method according to claim 7, wherein the service interface devices (6) comprise interface devices to at least one of a catering interface system, a hotel reservation system, taxi ordering system, transport reservation system, building access control system, reception system, room reservation system, room support system.

12. Computer program for controlling a meeting room which is loadable into an internal memory of one or more digital computers (2,3), comprising computer program code means to make, when said program is loaded in the computer or the computers (2,3), the computer or computers (2,3) execute the method according to one of claims 7 to 11.
